(19) **Europäisches Patentamt**

**European Patent Office**

**Office européen des brevets**

(11) **EP 0 635 554 B1**

(12) **EUROPEAN PATENT SPECIFICATION**

(45) Date of publication and mention
of the grant of the patent:
**24.05.2000 Bulletin 2000/21**

(51) Int. Cl.[7]: **C09D 183/05**, C03C 17/27,
C03C 25/10, G02B 1/10,
G02B 6/44

(21) Application number: **94305128.4**

(22) Date of filing: **13.07.1994**

(54) **Hydrogen silsesquioxane optical fiber coatings**

Beschichtungen aus Hydrogensilsesquioxan für optische Fasern

Revêtements de silsesquioxane hydrogéné pour des fibres optiques

(84) Designated Contracting States:
**DE FR GB IT**

(30) Priority: **19.07.1993 US 93028**

(43) Date of publication of application:
**25.01.1995 Bulletin 1995/04**

(73) Proprietor:
**DOW CORNING CORPORATION**
**Midland, Michigan 48686-0995 (US)**

(72) Inventors:
• **Dunn, Diana Kay**
**Midland, Michigan (US)**

• **Loboda, Mark Jon**
**Midland, Michigan (US)**

(74) Representative:
**Spott, Gottfried, Dr. et al**
**Spott & Weinmiller**
**Patentanwälte**
**Sendlinger-Tor-Platz 11**
**80336 München (DE)**

(56) References cited:
**EP-A- 0 427 395**     **US-A- 4 756 977**

Printed by Xerox (UK) Business Services
2.16.7 (HRS)/3.6

## Description

The present invention is a method of protecting optical fibers using hydrogen silsesquioxane resin and it also relates to the resultant fibers having these coatings thereon.

The manufacture of optical fibers generally comprises a process in which the fiber is drawn from a melted preform of the desired glass and then wound around a take-up drum. A protective fiber cladding is generally applied at a later stage of fabrication. Often, however, the fiber is damaged prior to cladding by winding, handling, transportation and the like. For instance, friction and wear often cause mechanical damage to the fibers as they are wound on the take-up spool.

A number of materials have been tried in an attempt to prevent this damage. For instance, materials such as epoxies, urethanes, acrylates, polyesters, fluoroplastics and silicones have been applied to the virgin fibers prior to winding. Such materials, however, are often difficult to process (e.g., remove prior to cladding) and are often not effective.

The use of hydrogen silsesquioxane for the protection of electronic devices is also known in the art in EP-A-0 427 395 and US-A-4,756,977. Processes for forming coatings on electronic devices are described therein which comprise diluting hydrogen silsesquioxane in solvents, applying the solutions to substrates, evaporating the solvents and heating the coated substrates to a temperature of 150 to 1000°C.

US-A-2 466 413 discloses the preparation of organohalosilanes by reacting hydrocarbon halides and silicon powder, wherein the distribution, by weight, and the particle size are as follows: 100 % of the particles are smaller than 420 microns in diameter, from 90 to 100 % of the particles are less than 149 microns in diameter and not more than 60 % of the particles are less than 4 microns in diameter, in the presence of a metallic catalyst, especially copper, having a specific particle size and distribution.

JP-A-57-125905 discloses a polymer cladding optical fiber coated with polysilsesquioxane or mixed resins of polysilsesquioxane and polydimethylsiloxane on the surface of a quarz core which coating further is coated with a polymer cladding made by using nylon resin or the like as a jacket layer.

The present invention teaches a method for the use of hydrogen silsesquioxane for the formation of protective coatings on optical fibers.

The present invention provides a method of protecting optical fibers. The method comprises coating the fiber with a composition comprising hydrogen silsesquioxane resin and a solvent followed by evaporating the solvent to thereby cause the silsesquioxane resin material to gel and form a protective coating. If desired, the coated fiber can even be heated to a temperature sufficient to convert the resin to a silica containing coating.

The present invention is based on our unexpected finding that hydrogen silsesquioxane can be used to apply protective coatings on optical fibers. The coatings can be merely gelled on the fiber and, thus, easily removed with a solvent prior to cladding. Alternatively, the coating can be baked and left on the surface to become a part of the cladding.

The optical fibers used in the present invention are not critical and nearly any known in the art are functional herein. Examples of such fibers include those of high silica glass and multicomponent glasses such as those containing silica in combination with other oxides such as boron oxide, germanium dioxide and/or phosphorous pentoxide.

Methods for production of these fibers are likewise known in the art. For example, they can be produced by melt spinning a preform of the desired glass followed by drawing the fiber onto a take-up drum. Alternative techniques, however, such as the use of chemical vapor deposition are also available. These techniques as well as others are described in the Kirk-Othmer Encyclopedia of Chemical Technology, Volume 10, New York, John Wiley & Sons, 1980.

According to the process of our invention, the optical fiber is coated with hydrogen silsesquioxane resin followed by gelling and, optionally, baking the resin in place.

The hydrogen silsesquioxane resin (H-resin) which may be used in the invention comprises a variety of hydrido-siloxane resins ($HSiO_{3/2}$) which may be either fully condensed or which may be only partially hydrolyzed and/or condensed. Although not represented by this formula, various units of these resins may have either no or more than one Si-H bond due to various factors involved in their formation and handling. Exemplary of fully condensed H-resins are those formed by the process of US-A-3,615,272. This polymeric material has units of the formula $(HSiO_{3/2})_n$ in which $\underline{n}$ is generally 8-1000. The resin has a number average molecular weight of from 800-2900 and a weight average molecular weight of between 8000-28,000 (obtained by GPC analysis using polydimethylsiloxane as a calibration standard).

Exemplary H-resins which may not be fully condensed (polymers containing units of the formula $HSi(OH)_xO_{(3-x)/2}$) include those of US-A 5,010,159 or those of US-A-4,999,397. The first patent describes a process which comprises hydrolyzing hydridosilanes in an arylsulfonic acid hydrate hydrolysis medium to form a resin which is then contacted with a neutralizing agent. The second patent (4,999,397) claims a process which comprises hydrolyzing trichlorosilane in a non-sulfur containing polar organic solvent by the addition of water or HCl and a metal oxide. The metal oxide therein acts as a HCl scavenger and, thereby, serves as a continuous source of water.

Exemplary H-resins which are not fully hydrolyzed or condensed are those having units of the

formula $HSi(OH)_x(OR)_yO_{z/2}$. Each R is independently an organic group which, when bonded to silicon through the oxygen atom, forms a hydrolyzable substituent, $x$ = 0-2, $y$ = 0-2, $z$ = 1-3, $x + y + z = 3$ and the average value of $y$ over all of the units of the polymer is greater than 0. Examples of R groups include alkyls of 1-6 carbon atoms such as methyl, ethyl and propyl, aryls such as phenyl and alkenyls such as vinyl. These resins may be formed by a process which comprises hydrolyzing a hydrocarbonoxy hydridosilane with water in an acidified oxygen-containing polar organic solvent.

A platinum, rhodium or copper catalyst may also be admixed with the hydrogen silsesquioxane to increase the rate and extent of its conversion to silica. Any platinum, rhodium or copper compound or complex that can be solubilized in this solution will be operable. For instance, an organoplatinum composition such as platinum acetylacetonate or rhodium catalyst $RhCl_3[S(CH_2CH_2CH_2CH_3)_2]_3$, can be obtained from Dow Corning Corporation, Midland, Michigan, U.S.A. The above catalysts are generally added to the solution in an amount of between 5 and 500 ppm platinum or rhodium based on the weight of resin.

H-resin is used in the present invention to coat an optical fiber. The H-resin can be used in any practical form but it is preferred to use a solution comprising the H-resin in a suitable solvent. If this solution approach is used, the solution is generally formed by simply dissolving or suspending the H-resin in a solvent or mixture of solvents. Various facilitating measures such as stirring and/or heat may be used to assist in the dissolution. The solvents which may be used in this method include alcohols such as ethyl or isopropyl; aromatic hydrocarbons such as benzene or toluene, alkanes such as n-heptane or dodecane; ketones, cyclic dimethylpolysiloxanes, esters and glycol ethers. All alcohols are in an amount sufficient to dissolve the above materials to low solids (0.1-50 weight percent solution).

According to the process of the invention, the optical fiber is coated with the above solution. Means such as spin, spray, dip or flow coating will all function herein. In addition, the coatings can be applied by a vapor deposition process as described in US-A-5,165,955.

The solvent is then allowed to evaporate thereby causing the siloxane based material to gel and form a protective coating. Any suitable means of evaporation such as simple air drying by exposure to an ambient environment or the application of a vacuum may be used.

Although the above described methods primarily focus on using a solution approach, one skilled in the art would recognize that other equivalent means of coating the fiber (eg., melt coating) would also be functional.

The resultant gelled coating is left on the fiber until such time as the fiber cladding is to be applied. This gelled coating can then be removed with simple solvents. Examples include alcohols, aromatic hydrocarbons, alkanes, ketones, cyclic dimethylpolysiloxanes, esters and glycol ethers. If desired, the fiber can also be cleaned with a strong acid such as hydrogen fluoride to remove any traces or potential contamination.

Alternatively, however, the gelled material may be heated to convert it to a silica-containing ceramic which may form a portion of the cladding. This may be particularly advantageous especially since the refractive index of H-resin is less than the refractive index of a silica fiber (1.4 vs. 1.46).

If the coating is to be heated, temperatures in the range of 50 to 1000°C. are generally used. The exact temperature, however, will depend on factors such as the pyrolysis atmosphere and the desired coating. Heating is generally conducted for a time sufficient to form the desired coating, generally up to 6 hours, with less than 2 hours being preferred.

The above heating may be conducted at any effective atmospheric pressure from vacuum to superatmospheric and under any effective oxidizing or non-oxidizing gaseous environment such as those comprising air, $O_2$, an inert gas ($N_2$, etc.), ammonia, amines, moisture, $N_2O$, hydrogen and hydrocarbons.

Any method of heating such as the use of a convection oven, rapid thermal processing, hot plate or radiant or microwave energy is generally functional herein. The rate of heating, moreover, is also not critical, but it is most practical and preferred to heat as rapidly as possible.

The fibers coated by these methods are resistant to impurities such as moisture which can be detrimental to the fibers. In addition, the coated fibers are less prone to mechanical damage.

This invention is also advantageous in that a wide variety of coatings can be applied, for example, by changing the concentration of H-resin in solution, changing the solvent, changing the dip rate or temperature.

The following example is included so that one skilled in the art may more readily understand the invention.

EXAMPLE 1

Hydrogen silsesquioxane resin (made by the method of Collins et al. in US-A 3,615,272) was diluted to 10 wt% in octamethyltetracyclosiloxane. A 2 mm diameter quartz rod was then dipped into this solution and fired at 600°C. for 3 hours in oxygen. The rod was allowed to cool to room temperature.

SEM examination of the rod showed that a uniform, continuous silica coating had been applied to the rod. The final coating was 1 micrometer thick. Based on expected shrinkage for this material, it is estimated that the "as deposited" coating was approximately 1.1 micrometers thick.

## Claims

1. A method of forming a coating on an optical fiber comprising coating an optical fiber with a composition comprising hydrogen silsesquioxane resin and a solvent, and evaporating the solvent to thereby cause the silsesquioxane resin material to gel and form a protective coating.

2. The method of claim 1 wherein fiber having a coating of gelled hydrogen silsesquioxane resin is heated to a temperature sufficient to convert the hydrogen silsesquioxane resin to a silica containing material.

3. The method of claim 2 wherein the coated fiber is heated at a temperature in the range of 50 to 1000°C. for up to 6 hours in an atmosphere selected from air, $O_2$, inert gases, ammonia, amines, moisture and $N_2O$.

## Patentansprüche

1. Verfahren zur Herstellung eines Überzugs auf optischen Fasern durch Beschichten optischer Fasern mit einer Zusammensetzung, die Wasserstoffsilsesquioxanharz und ein Lösungsmittel umfaßt, und anschließendes Verdampfen des Lösungsmittels, um das Silsesquioxanharzmaterial zum Gelieren zu bringen und um einen Schutzüberzug auszubilden.

2. Verfahren nach Anspruch 1, wobei die Faser mit einem Überzug aus geliertem Wasserstoffsilsesquioxanharz auf eine Temperatur erwärmt wird, die ausreicht, um das Wasserstoffsilsesquioxanharz in ein siliciumdioxidhaltiges Material umzuwandeln.

3. Verfahren nach Anspruch 2, wobei die beschichtete Faser auf eine Temperatur im Bereich von 50-1000°C während bis zu 6 h in einer Atmosphäre erwärmt wird, die aus Luft, $O_2$, Inertgasen, Ammoniak, Aminen, Feuchtigkeit und $N_2O$ ausgewählt ist.

## Revendications

1. Procédé de formation d'un revêtement sur une fibre optique, comprenant le revêtement d'une fibre optique avec une composition comprenant une résine d'hydrogénosilsesquioxane et un solvant, et l'évaporation du solvant pour que la matière de résine de silsesquioxane se gélifie et forme un revêtement protecteur.

2. Procédé selon la revendication 1, dans lequel une fibre ayant un revêtement de résine d'hydrogénosilsesquioxane gélifié est chauffée à une température suffisante pour convertir la résine d'hydrogénosilsesquioxane en une matière contenant de la silice.

3. Procédé selon la revendication 2, dans lequel la fibre revêtue est chauffée à une température dans la gamme de 50 à 1000 °C pendant jusqu'à 6 heures dans une atmosphère choisie parmi l'air, $O_2$, les gaz inertes, l'ammoniac, les amines, l'humidité et $N_2O$.